# EUROPÄISCHE PATENTSCHRIFT

(11) **EP 3 058 430 B1**
(45) Veröffentlichungstag und Bekanntmachung des Hinweises auf die Patenterteilung: **29.11.2017**
(21) Anmeldenummer: 14793497.0
(22) Anmeldetag: 28.10.2014
(51) Int. Cl.: G01M 7/00, G05B 23/02, G01H 1/00

(54) **VORRICHTUNG SOWIE VERFAHREN ZUM ERFASSEN DES AKTUELLEN SCHÄDIGUNGSZUSTANDES EINER MASCHINE**
APPARATUS AND METHOD FOR DETECTING THE CURRENT DAMAGED STATE OF A MACHINE
DISPOSITIF ET PROCÉDÉ PERMETTANT DE DÉTECTER L'ÉTAT D'ENDOMMAGEMENT INSTANTANÉ D'UNE MACHINE

(30) Priorität: 16.12.2013 DE 102013226049
(43) Veröffentlichungstag der Anmeldung: 24.08.2016
(73) Patentinhaber: Siemens Aktiengesellschaft, 80333 München (DE)
(72) Erfinder: PFEIFER, Uwe, 12557 Berlin (DE); BRUMMEL, Hans-Gerd, 13465 Berlin (DE)
(86) Internationale Anmeldenummer: PCT/EP2014/073098
(87) Internationale Veröffentlichungsnummer: WO 2015/090698

(56) Entgegenhaltungen:
- WO-A2-2004/059399
- DE-A1- 4 447 288

## Beschreibung

Die Erfindung betrifft alle allgemeinen Maschinen, welche als Strömungsmaschinen ausgebildet sind, wie z.B. Turbomaschinen, Gasturbinen, Kompressoren, Turbolader oder Flugtriebwerke.

Strömungsmaschinen wie z.B. Gasturbinen sind dadurch gekennzeichnet, dass sie aus mehrstufigen Verdichter- und Turbinenkomponenten bestehen. Eine Verdichter- bzw. Turbinenstufe besteht dabei aus einer feststehenden Leitschaufelreihe und einer rotierenden Laufschaufelreihe. Die Leit- und Laufschaufelreihe besteht aus einer Vielzahl von einzelnen Schaufeln. Eine Gesamtmaschine besteht somit aus mehreren hundert Leit-und Laufschaufeln. Diese Schaufeln unterliegen während des Betriebs der Maschine hohen mechanischen, aerodynamischen und thermischen Belastungen.

Diese Belastungen können zu unerwünschten Schädigungen der Schaufeln führen. Das dabei vorhandene spezifische Problem besteht darin, dass zunächst nur geringe Schäden an einer einzigen Schaufel im Verlauf des weiteren Betriebs der Maschine, letztendlich zum Totalschaden führen können. Diese Schadensprogression stellt ein bekanntes Phänomen dar und kann sich im Zeitraum weniger Minuten bis zu Tagen von einer minimalen Anfangsschädigung bis zu einem Totalschaden entwickeln. Es besteht daher das dringende Problem, die geringe Anfangsschädigung, welche sehr vielfältige Ursachen und Ausprägungen haben kann, während des Betriebs der Maschine zu erkennen und eine Warnung ableiten zu können. Der Reparaturaufwand zur Beseitigung einer geringen Anfangsschädigung ist sehr viel kleiner als ein Totalschaden der Maschine, bei der alle Schaufeln und teilweise auch weitere Komponenten wie Brenner, Filter, Drucksensoren etc. ersetzt werden müssen.

Die erste Aufgabe ist die Angabe einer ersten Vorrichtung, welche das oben genannte Problem löst. Eine zweite Aufgabe liegt in der Angabe eines Verfahrens, welches das oben genannte Problem löst.

Die erste Aufgabe wird gelöst durch die Angabe einer Vorrichtung zum Erfassen des aktuellen Schädigungszustandes einer Maschine umfassend mehrere Drucksensoren zur Erfassung des Drucks über einen Zeitbereich der zu überwachenden Maschine und zur Ausgabe mehrerer Drucksignale, wobei die Drucksignale im Zeitbereich vorliegen und eine Datenerfassungs- und Bearbeitungseinrichtung, zur Erfassung der Drucksignale der Drucksensoren und Bearbeitung der Drucksignale. Erfindungsgemäß umfasst:
- die Datenerfassungs- und Bearbeitungseinrichtung eine Fast-Fourier-Analysevorrichtung, zur Durchführung einer Transformation der im Zeitbereich vorliegenden Drucksignale in einen Frequenzbereich als zeitlich diskrete Frequenzspektren,
- die Datenerfassungs- und Bearbeitungseinrichtung zudem eine Räumlichen-Aggregationseinheit und eine Zeitlichen-Aggregationseinheit, welche die zeitlich diskreten Frequenzspektren zusammenfassen,
   so dass zeitlich und räumlich aggregierte diskrete Frequenzspektren erzeugbar sind,
   wobei die Anwendung der Räumlichen-Aggregationseinheit als auch die Anwendung der Zeitlichen-Aggregationseinheit in unterschiedlicher Reihenfolge auf die zeitlich diskreten Frequenzspektren erfolgbar ist,
- die Datenerfassungs- und Bearbeitungseinrichtung zudem eine Cepstrum-Analyseeinheit, zur Erzeugung von einem Cepstrum mit verschiedenen Istcepstrenwerten aus den zeitlich und räumlich aggregierten diskreten Frequenzspektren,
- die Datenerfassungs- und Bearbeitungseinrichtung zudem eine Recheneinheit, welche aus den so erzeugten Cepstren in einem vorab definierten Zeitabstand mehrere, benachbarte Istcepstrenwerte umfassende, Istcepstrenintervalle erzeugt, wodurch ein Istcepstrumwert, welcher aus zumindest drei benachbarten Istcepstrenintervallen ermittelbar ist, erzeugbar ist,
- die Datenerfassungs- und Bearbeitungseinrichtung eine Einheit, welche einen Soll-Ist-Vergleich mit dem so erzeugten Istcepstrumwert und einem vorab bestimmten Sollcepstrumwert berechnet.

Durch die Erfindung können einfache Schäden, insbesondere die Anfangsschäden an einer Maschine, insbesondere bei den Schaufeln einer Gasturbine, schnell erkannt werden. Somit kann eine Weiterentwicklung dieser Anfangsschäden zum Totalschaden schnell und zuverlässig gestoppt werden. Mit der Erfindung können weiterhin kostenintensive Reparaturen vermieden werden, da kleinere Anfangsschäden für gewöhnlich mit geringerem Aufwand behoben werden können. Der von der Vorrichtung durchgeführte Soll-Ist-Vergleich liefert einen einfachen, analogen Kennwert, der an das Prozessleitsystem der Anlage übertragen werden und mit einer einfachen Grenzwertüberwachung beobachtet werden kann. Vorteilhafterweise erhält man eine erfindungsgemäße robuste Vorrichtung, die von anderen Parametern (z.B. den Betriebszuständen der Maschine wie Last, Umgebungsbedingungen etc.) unabhängig ist.

Bevorzugt fasst die Räumliche-Aggregationseinheit die zeitlich diskreten Frequenzspektren zu räumlich virtuellen Frequenzspektren zusammen; wobei anschließend die Zeitliche-Aggregationseinheit die räumlich virtuellen Frequenzspektren zu zeitlich-räumlich virtuellen Ziel-Frequenzspektren zusammenfasst, und wobei anschließend die Cepstrum-Analyseeinheit ein Cepstrum mit verschiedenen Istcepstrenwerten aus dem zeitlich-räumlich virtuellen Ziel-Frequenzspektrum erzeugt.

Bevorzugt erzeugt die Datenerfassungs- und Bearbeitungseinrichtung ein Sollcepstrum mit Hilfe einer ungeschädigten Maschine, aus welchem dann der zu den Istcepstrumwert kongruierende Sollcepstrumwert bestimmbar ist. Dadurch lässt sich sehr einfach ein geeigneter Sollcepstrumwert bestimmen.

Bevorzugt ist der Istcepstrumwert mit dem Schädigungsgrad der überwachenden Maschine korrelierbar. Dadurch ist auch direkt vom Istcepstrumwert eine Schädigung erkennbar/ableitbar.

Bevorzugt ist eine Maschineneinheit vorgesehen, welche bei Überschreiten eines vorab definierten Schwellwertes des Soll-Ist-Vergleichs einen Notbetrieb einleitet. Dadurch wird Zeit für das Einleiten eines Notbetriebs gespart. Ein Totalschaden kann somit gegebenenfalls vermieden werden.

Bevorzugt sind die mehreren Drucksensoren dynamische Drucksensoren. Diese sind besonders gut für den Einsatz in rotationsdynamischen Systemen geeignet.

Bevorzugt ist die Maschine ein Verdichter mit Laufschaufeln und einem Rotor. In bevorzugter Ausgestaltung umfasst der Verdichter einen Verdichterumfang und einen Verdichteraustritt, wobei die mehreren Drucksensoren über den Verdichterumfang am Verdichteraustritt angebracht sind. Dies dient der Plausibilität, der Verbesserung der Verfügbarkeit und der Mittelung der erfassten Strömungsparameter über die Umfangskoordinate.

Bevorzugt umfasst der Verdichter einen Verdichterumfang und die Drucksensoren sind nicht unterhalb dieser Laufschaufeln am Verdichterumfang angebracht. Dies würde zu hohen Druckamplituden führen, welche sich ungünstig auf die Vorrichtung auswirken würden.

In bevorzugter Ausgestaltung weist der Rotor eine Drehfrequenz auf. Bevorzugt ergibt sich die minimale Bandbreite der Datenerfassungs- und Bearbeitungseinrichtung aus der maximalen Anzahl der Laufschaufeln multipliziert mit der doppelten Drehfrequenz des Rotors. Damit können die Spektren und die Cepstren richtig erfassen werden.

Bevorzugt weist die Maschine einen Verdichteraustrittssammelraum und einen Brennerbereich auf, wobei die Drucksensoren im Verdichteraustrittssammelraum und/oder Brennerbereich angeordnet sind.

Bevorzugt ist der Istcepstrumwert, welcher aus zumindest drei benachbarten Istcepstrenintervallen ermittelbar ist, durch Aufsummation erzeugbar. Auch jede andere zweckdienliche Rechenmethode ist geeignet.

Die zweite Aufgabe wird gelöst durch die Angabe eines Verfahrens zum Erfassen des aktuellen Schädigungszustandes einer Maschine, bei welcher ein Druck über einen Zeitbereich der zu überwachenden Maschine durch mehrere Drucksensoren erfasst wird, und mehrere Drucksignale, welche in dem Zeitbereich vorliegen, ausgegeben werden, mit folgenden Schritten:
- Transformation der im Zeitbereich vorliegenden, Drucksignale in den Frequenzbereich als zeitlich diskrete Frequenzspektren durch eine in einer Datenerfassungs- und Bearbeitungseinrichtung vorgesehene Fast-Fourier-Analysevorrichtung,
- Räumliches und zeitliches Zusammenfassen der zeitlich diskreten Frequenzspektren in zeitlich und räumlich aggregierte diskrete Frequenzspektren durch eine in der Datenerfassungs- und Bearbeitungseinrichtung vorgesehenen Räumlichen-Aggregationseinheit und Zeitlichen-Aggregationseinheit,
- Erzeugung von einem Cepstrum mit verschiedenen Istcepstrenwerten aus den zeitlich und räumlich aggregierten diskreten Frequenzspektren durch eine Cepstrum-Analyseeinheit,
- Erzeugung von, aus den so erzeugten Cepstren, mehreren, benachbarte Istcepstrenwerte umfassende, Istcepstrenintervalle in einem vorab definierten Zeitabstand durch eine Recheneinheit,
- Erzeugen eines Istcepstrumwerts, welcher aus zumindest drei benachbarten Istcepstrenintervallen ermittelt wird,
- Berechnen eines Soll-Ist-Vergleichs mit dem so erzeugten Istcepstrumwert und einem vorab bestimmten Sollcepstrumwert.

Das erfindungsgemäße Verfahren und die erfindungsgemäße Vorrichtung können sowohl permanent unter Echtzeitbedingungen mit einer Aussageverzögerung im Sekunden- bis Minutenbereich als auch zur nachträglichen Auswertung von gespeicherten Daten zur Schadensanalyse benutzt werden.

Bevorzugt werden in der Räumlichen-Aggregationseinheit die zeitlich diskreten Frequenzspektren zu räumlich virtuellen Frequenzspektren zusammenfasst, wobei anschließend in der Zeitlichen-Aggregationseinheit die räumlich virtuellen Frequenzspektren zu zeitlich-räumlich virtuellen Ziel-Frequenzspektren zusammenfasst werden, und wobei anschließend in der Cepstrum-Analyseeinheit ein Cepstrum mit verschiedenen Istcepstrenwerten aus dem zeitlich-räumlich virtuellen Ziel-Frequenzspektrum erzeugt werden.

Bevorzugt wird das zeitliche Zusammenfassen der räumlich virtuellen Frequenzspektren oder der zeitlich diskreten Frequenzspektren mit dem Peak-Hold-Algorithmus oder durch eine Mittelwertbildung durchgeführt.

Bevorzugt wird der Istcepstrumwert aus höchstens neun benachbarten Istcepstrenintervallen erzeugt. Der Istcepstrumwert kann auch aus allen vorhandenen oder einer Teilmenge benachbarter Istcepstrenintervallen erzeugt werden. Bevorzugt wird der Istcepstrumwert, welcher aus zumindest drei benachbarten Istcepstrenintervalle ermittelbar ist, durch Aufsummation erzeugt. Es kann aber auch jede andere geeignete Rechenmethode angewandt werden.

In bevorzugter Ausgestaltung korreliert der Istcepstrumwert mit dem Schädigungsgrad der zu überwachenden Maschine.

Bevorzugt wird bei Überschreiten eines vorab definierten Schwellwertes des Soll-Ist-Vergleichs ein Notbetrieb durch eine vorgesehene Maschineneinheit eingeleitet.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1:: schematisch das erfindungsgemäße Verfahren,
- FIG 2:: das erfindungsgemäße Verfahren anhand eines Auswertungsbeispiels.

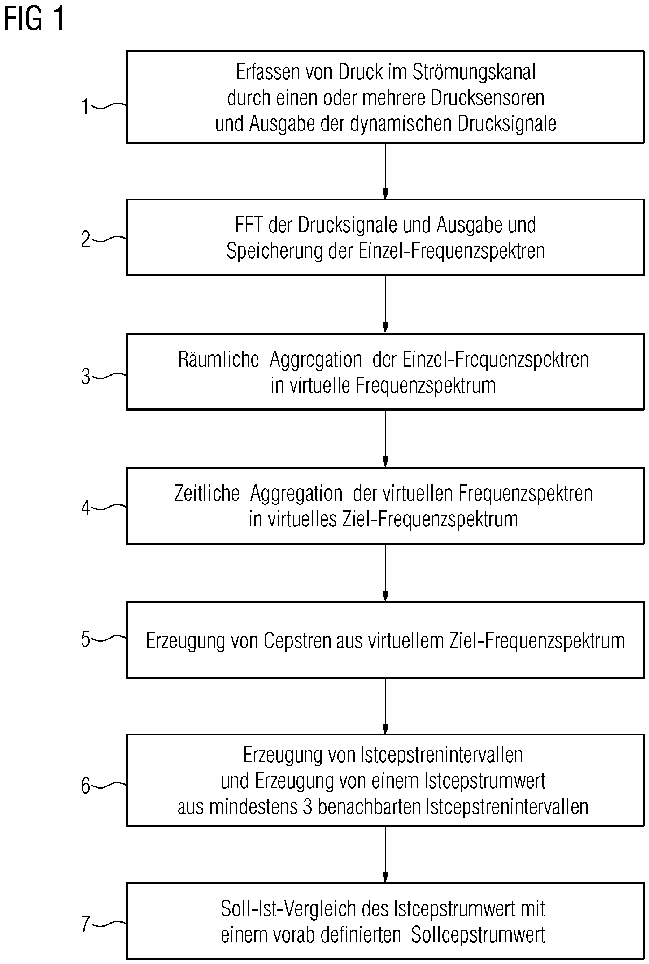

FIG 1 zeigt schematisch das Verfahren. Dabei werden geeignete Drucksensoren zum Erfassen des aktuellen Schädigungszustandes in einer Maschine angeordnet. Ohne Beschränkung der Allgemeinheit wird nun als Maschine nachfolgend der Verdichter herangezogen. Im Verdichter, insbesondere im Axialverdichter einer Gasturbine, werden im Strömungskanal dynamische Drucksensoren angeordnet. Die Platzierung der Drucksensoren richtet sich dabei nach der gewünschten Detektionsempfindlichkeit. Vorteilhafterweise werden am Austritt des Verdichters am Umfang bei identischer Längskoordinate mehrere dieser Drucksensoren d.h. Messstellen, angeordnet. Dies dient der Plausibilität, der Verbesserung der Verfügbarkeit und der Mittelung der erfassten Strömungsparameter über die Umfangskoordinate. Es ist vorteilhaft, wenn die Drucksensoren nicht in denjenigen Wandbereichen angebracht werden, die durch Laufschaufeln direkt überstrichen werden. Dies würde zu hohen Druckamplituden führen, die die beabsichtigte Analyse stören könnten. Es kann sogar ausreichen, dynamische Drucksensoren anzuwenden, die stromabwärts angeordnet sind und für andere Zwecke ursprünglich und zusätzlich vorgesehen sind. Hiermit sind z.B. dynamische Drucksensoren im Verdichteraustrittssammelraum oder im Brennerbereich der Maschine gemeint, die der Überwachung der Verbrennung dienen. Dadurch kann auf zusätzlich angeordnete Drucksensoren vorteilhafterweise verzichtet werden. Es können jedoch auch Drucksensoren verwendet werden, die in Abblasekanälen des Verdichters oder an sonstigen, durch die Strömung kontaktierten Wandbereichen des Verdichters angeordnet sind. Selbstverständlich können die Drucksensoren auch anderweitig angeordnet sein. Durch die physikalisch bedingte Schallausbreitung mit Schallgeschwindigkeit plus Strömungsgeschwindigkeit, lassen sich die zur Schadensanalyse und zur Schadenserkennung an Schaufeln auftretenden Strömungsparameter durch die Erfindung auch stromabwärts detektieren.

Die dynamischen Drucksensoren weisen vorteilhafterweise eine geeignete Empfindlichkeit, z.B. eine Empfindlichkeit von 10 Pa, und eine ausreichende dynamische Bandbreite auf. Die minimale Bandbreite in Hertz der gesamten Druckmesskette ist vorteilhafterweise größer sein als das Produkt aus der maximalen Anzahl der Laufschaufeln aller beteiligten Stufen des Axialverdichters, multipliziert mit der doppelten Drehfrequenz des Rotors.

Die dynamischen Drucksensoren erfassen den dynamischen Druck über einen Zeitbereich der zu überwachenden Maschine, hier einem Verdichter und geben mehrere dynamische Drucksignale aus. Dabei sind die dynamischen Drucksignale Einzelsignale. Diese Einzelsignale, d.h. Drucksignale der dynamischen Drucksensoren liegen im Zeitbereich vor, d.h. als variable abhängige Größen mit der Zeit als unabhängigem Parameter. Die dynamischen Drucksignale werden durch eine geeignete Datenerfassungs- und Bearbeitungseinrichtung erfasst und einer Signalverarbeitung unterzogen 1. Die Datenerfassungs- und Bearbeitungseinrichtung umfasst zunächst eine Fast-Fourier-Analysevorrichtung, zur Durchführung einer Transformation der im Zeitbereich vorliegenden Drucksignale in den Frequenzbereich als zeitlich diskrete Frequenzspektren 2. Dabei handelt es sich bei der Transformation vorzugsweise um eine schnelle Fourier-Transformation (fast Fourier transform, FFT).

Die FFT wird unter der Verwendung bestimmter Parameter, wie beispielsweise Blockgröße, Fensterfunktion und Overlap, durchgeführt. Diese Parameter sind entsprechend der gewünschten Genauigkeit und der gewünschten Frequenzauflösung optimal und entsprechend dem konkreten Anwendungsfall zu wählen.

Nach Durchführung der FFT liegen die einzelnen Drucksignale im Frequenzbereich als zeitlich diskrete Frequenzspektren im Amplituden- oder Leistungsamplitudenbereich vor.

Die Datenerfassungs- und Bearbeitungseinrichtung umfasst zudem eine Räumliche-Aggregationseinheit und Zeitliche-Aggregationseinheit, welche die zeitlich und räumlich von den am Umfang verteilt angeordneten Sensoren stammenden diskreten Frequenzspektren räumlich und zeitlich zu zeitlich-räumlich virtuellen Frequenzspektren zusammenfasst, 3 und 4.

Beispielhafterweise wird nun die Räumliche-Aggregationseinheit zuerst auf die zeitlich diskreten Frequenzspektren angewandt. Bei der räumlichen Aggregation handelt es sich im Wesentlichen um die Zusammenfassung der Einzelspektren mehrerer Messstellen zu einem virtuellen Signal bzw. zum Spektrum einer virtuellen Messstelle, 3. Dadurch werden nun räumlich virtuelle Frequenzspektren erzeugt. Als Berechnungsmethode kann hierbei die Mittelung oder das Peak-Hold-Verfahren eingesetzt werden.

Weiterhin umfasst die Datenerfassungs- und Bearbeitungseinrichtung zudem eine Zeitliche-Aggregationseinheit, welche die vorliegenden einzelnen räumlich virtuellen Frequenzspektren zeitlich zu einem zeitlich-räumlich virtuellen Ziel-Frequenzspektrum zusammenfasst (zeitliche Aggregation) 4.

D.h. die Zeitliche-Aggregationseinheit führt eine zeitliche Aggregation durch, indem mehrere diskrete Einzelspektren bzw. Frequenzspektren der räumlich virtuellen Messstelle zu einem zeitlich-räumlichen virtuellen Signal bzw. Spektrum zusammengefasst werden. Als Berechnungsmethode kann hierbei die Mittelung oder das Peak-Hold-Verfahren eingesetzt werden. D.h. die zeitliche Aggregation fasst mehrere diskrete Einzelspektren einer realen oder räumlich virtuellen Messstelle zu einem virtuellen Signal bzw. Spektrum zusammen.

Es kann selbstverständlich die zeitliche Aggregation ohne vorherige räumliche Aggregation stattfinden. Auch kann die räumliche Aggregation ohne die zeitliche Aggregation, als auch die zeitliche Aggregation vor der räumlichen Aggregation durchgeführt werden. Dies wird jedoch hier nicht genauer ausgeführt. Vorteilhafterweise wird die zeitliche Aggregation dabei nach dem Peak-Hold-Algorithmus oder durch eine Mittelwertbildung durchgeführt.

Die räumliche und zeitliche Aggregation haben zum Vorteil, dass der Rechenaufwand in den nachfolgenden Prozessschritten verringert wird, ohne dass Informationsverluste eintreten.

Die durch die räumliche und zeitliche Aggregation erhaltenen Signale bzw. Spektren werden nun einer zeitlich ebenfalls kontinuierlich ablaufenden weiteren Signalverarbeitung unterzogen.

Die Datenerfassungs- und Bearbeitungseinrichtung umfasst dazu eine Cepstrum-Analyseeinheit 5, zur Erzeugung von Cepstren mit verschiedenen Cepstrenwerten aus dem zeitlich-räumlich virtuellen Ziel-Frequenzspektrum. In der Cepstrum-Analyseeinheit werden zum Erzeugen eines Cepstrums die Spektren im komplexen Zahlenbereich logarithmiert und anschließend einer inversen FFT unterzogen. Dabei kann der natürliche oder dekadische Logarithmus angewandt werden.

Die Datenerfassungs- und Bearbeitungseinrichtung umfasst weiterhin eine Recheneinheit, welche aus den so erzeugten Cepstren in einem vorab definierten Zeitabstand ΔT zumindest drei, mehrere benachbarte Cepstrenwerte umfassende Istcepstrenintervalle erzeugt, wodurch ein Istcepstrumwert, welcher zumindest drei benachbarte Istcepstrenintervalle umfasst, erzeugbar ist 6. Dabei werden die zumindest drei benachbarten Istcepstrenintervalle vorzugsweise aufsummiert. Selbstverständlich können auch andere Berechnungsgrundlagen zur Anwendung kommen. Dabei kann der Istcepstrumwert auch aus vier - neun benachbarten Cepstrenintervallen erzeugt werden. Dabei hängt der vorab definierte Zeitabstand ΔT von der Drehzahl der Maschine ab und stellt die Periodendauer einer Umdrehung des Rotors dar. Es besteht auch die Möglichkeit, den Zeitabstand ΔT nicht vorab fest zu bestimmen, sondern kontinuierlich aus der aktuell gemessenen Drehzahl des Rotors zu berechnen.

Zudem umfasst die Datenerfassungs- und Bearbeitungseinrichtung eine Einheit, welche einen Soll-Ist-Vergleich mit dem so erzeugten Istcepstrumwert und einem vorab bestimmten Sollcepstrumwert bestimmt 7.

Die Sollcepstren werden dabei mit Hilfe einer ungeschädigten Maschine erzeugt, aus welchen dann der zu den Istcepstrumwert kongruierende Sollcepstrumwert bestimmbar ist.

Durch diesen Soll-Ist-Vergleich des so erzeugten Istcepstrumwert mit einem vorab bestimmten Sollcepstrumwert kann ein Soll-Ist-Wert, der nachfolgend auch als Schwellwert bezeichnet wird, gebildet werden.

Der so ermittelte Istcepstrumwert stellt eine Kennzahl dar, die eine direkte positive Korrelation mit dem Schädigungszustand z.B. einer aus Leit- und Laufschaufeln bestehenden Verdichter- oder Turbinenanordnung aufweist. Aus der numerischen Größe dieses Istcepstrumwerts kann direkt auf den Schädigungszustand geschlossen werden. Das bedeutet, dass nach Berechnen des Soll-Ist-Vergleichs, ein Schwellwerts definiert werden kann, unterhalb dessen von einem ungeschädigten Verdichter bzw. Turbine ausgegangen werden kann. Bei Überschreiten dieses Schwellwerts im laufenden Betrieb liegt dagegen eine Schädigung vor. Ebenso kann ein Grenzwert definiert werden, oberhalb dessen ein Notbetrieb eingeleitet werden muss.

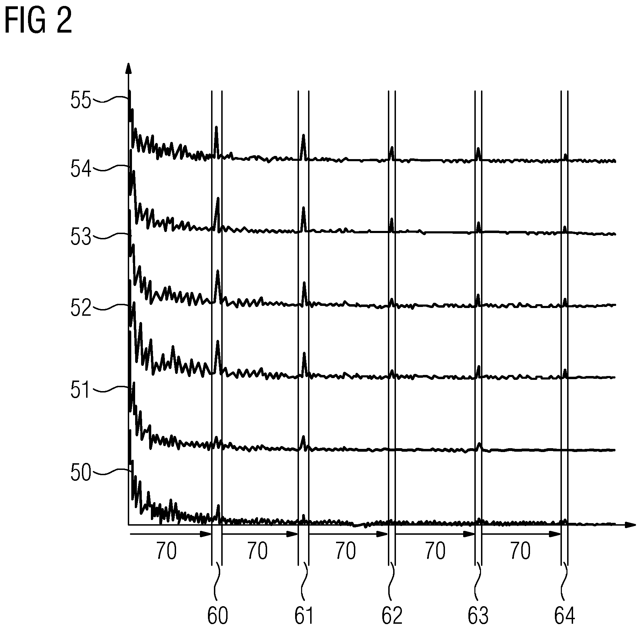

FIG 2 zeigt eine Beispielauswertung des erfindungsgemäßen Verfahrens. Die Grafik enthält die Daten von sechs Cepstren, die von einem identischen Verdichter einer Gasturbine, aber mit unterschiedlichen Schädigungsstufen stammen. Sie sind zur besseren Unterscheidung gestaffelt, das heißt mit einem grafischen Abstand übereinander gezeichnet, da sie sich sonst überdecken würden.

Der untere Linienzug 50 ist von einem Verdichter ohne Schäden, das heißt den Sollcepstren. Dort treten an in vorab definierten Zeitabständen ΔT, 70, nur geringe Spitzenamplituden d.h. kleine Sollcepstrenwerte auf. Da die Abtastrate des Messwerterfassungssystems sehr konstant ist und die Drehzahl der Maschine leicht schwanken kann, liegen für das gezeigte Beispiel in den berechneten Zeitabständen 70 die Istcepstrenwerte der Cepstren 50-55 nicht exakt übereinander. Daher werden (hier fünf) Ist-/Sollcepstrenintervalle 60,61,62,63,64 gebildet.

Die Ist-/Sollcepstrenintervalle 60,61,62,63,64 sind durch Linien markiert. Der Vergleich zur obersten Linie 55, die von einem geschädigten Verdichter stammt, zeigt wesentlich höhere Istcepstrenwerte in den Intervallen 61-64 als in den Sollcepstrenintervallen, welche mit der untersten Linie 50 dargestellt werden.

Es werden in einem definierten Zeitabstand 70 eine bestimmte Anzahl Istcepstrenintervalle (hier die fünf markierten) definiert. Diese Zeitabstände 70 stehen in direkter Korrelation zur Drehzahl der Maschine.

Die Cepstren liegen als diskrete Zahlenfolgen vor. Da die Abtastrate des Messwerterfassungssystems sehr konstant ist und die Drehzahl der Maschine leicht schwanken kann, passen die berechneten Zeitabstände 70 nicht exakt auf die diskreten Zeitintervalle der Cepstren 50-55.

Um ein robustes Verfahren, das von anderen Parametern z.B. den Betriebszuständen der Maschine wie Last, Umgebungsbedingungen etc. relativ unabhängig ist, zu erhalten, werden nun bis zu neun dieser Ist-/Sollcepstrenintervalle herangezogen, um einen Istcepstrumwert bzw. Sollcepstrumwert zu ermitteln. Als bevorzugte Methode zur Erzeugung des Ist-/Sollcepstrumwertes kann die Addition aller in den definierten Zeitintervallen 60..64 liegenden Cepstrenwerte angewandt werden. Es können jedoch auch weitere Verfahren, wie z.B. die Mittelwertbildung aller in den definierten Zeitintervallen 60..64 liegenden Cepstrenwerte angewandt werden. Kennzeichnend für alle möglichen Verfahren ist jedoch, dass eine gesicherte Korrelation des erzeugten Wertes mit der Amplitude der in den definierten Zeitintervallen liegenden Cepstrenamplituden existiert.

Bei einer geschädigten Maschine mit verbogenen, abgebrochenen Schaufeln werden intensivere, drehzahlsynchrone Turbulenzen erzeugt. Durch das erfindungsgemäße Verfahren als auch die erfindungsgemäße Vorrichtung zur direkten Beurteilung des aktuellen Schädigungszustandes können anfängliche geringe Schädigungen zeitnah erkannt werden und ein Totalschaden der Maschine verhindert werden. Das hat direkte Einsparungen von Reparaturaufwand in erheblicher Größe zur Folge. Zugleich wird die zeitliche Dauer der Reparaturmaßnahme verringert, wodurch ein zusätzlicher Einsparungseffekt erreicht wird.

Das erfindungsgemäße Verfahren und die erfindungsgemäße Vorrichtung können sowohl permanent unter Echtzeitbedingungen mit einer Aussageverzögerung im Sekunden- bis Minutenbereich als auch zur nachträglichen Auswertung von gespeicherten Daten zur Schadensanalyse benutzt werden. Die Untersuchung von realen Schadensfällen hat die Wirksamkeit der Vorrichtung und des Verfahrens gezeigt.

## Patentansprüche

1. Vorrichtung zum Erfassen des aktuellen Schädigungszustandes einer Maschine umfassend:
mehrere Drucksensoren zur Erfassung des Drucks über einen Zeitbereich der zu überwachenden Maschine und zur Ausgabe mehrerer Drucksignale, wobei die Drucksignale im Zeitbereich vorliegen und eine Datenerfassungs- und Bearbeitungseinrichtung zur Erfassung der Drucksignale der Drucksensoren und Bearbeitung der Drucksignale (1)
**dadurch gekennzeichnet, dass**
- die Datenerfassungs- und Bearbeitungseinrichtung eine Fast-Fourier-Analysevorrichtung umfasst, zur Durchführung einer Transformation der im Zeitbereich vorliegenden Drucksignale in einen Frequenzbereich als zeitlich diskrete Frequenzspektren (2),
- die Datenerfassungs- und Bearbeitungseinrichtung zudem eine Räumliche-Aggregationseinheit und eine Zeitliche-Aggregationseinheit umfasst, welche die zeitlich diskreten Frequenzspektren zusammenfassen,
- so dass zeitlich und räumlich aggregierte diskrete Frequenzspektren erzeugbar sind (3,4; 4,3),
- wobei die Anwendung der Räumlichen-Aggregationseinheit als auch die Anwendung der Zeitlichen-Aggregationseinheit in unterschiedlicher Reihenfolge auf die zeitlich diskreten Frequenzspektren erfolgbar ist,
- die Datenerfassungs- und Bearbeitungseinrichtung zudem eine Cepstrum-Analyseeinheit umfasst zur Erzeugung von einem Cepstrum mit verschiedenen Istcepstrenwerten aus den zeitlich und räumlich aggregierten diskreten Frequenzspektren (5),
- wobei die Datenerfassungs- und Bearbeitungseinrichtung zudem eine Recheneinheit umfasst, welche aus den so erzeugten Cepstren in einem vorab definierten Zeitabstand mehrere, benachbarte Istcepstrenwerte umfassende, Istcepstrenintervalle erzeugt, wodurch ein Istcepstrumwert, welcher aus zumindest drei benachbarten Istcepstrenintervalle ermittelbar ist, erzeugbar ist (6),
- wobei die Datenerfassungs- und Bearbeitungseinrichtung eine Einheit umfasst, welche einen Soll-Ist-Vergleich mit dem so erzeugten Istcepstrumwert und einem vorab bestimmten Sollcepstrumwert berechnet (7).

2. Vorrichtung zum Erfassen des aktuellen Schädigungszustandes einer Maschine nach Anspruch 1,
**dadurch gekennzeichnet, dass**
- die Räumliche-Aggregationseinheit die zeitlich diskreten Frequenzspektren zu räumlich virtuellen Frequenzspektren zusammenfasst (3),
- und anschließend die Zeitliche-Aggregationseinheit die räumlich virtuelle Frequenzspektren zu zeitlich-räumlich virtuellen Ziel-Frequenzspektren zusammenfasst (4),
- und anschließend die Cepstrum-Analyseeinheit ein Cepstrum mit verschiedenen Istcepstrenwerten aus dem zeitlich-räumlich virtuellen Ziel-Frequenzspektrum (5) erzeugt.

3. Vorrichtung zum Erfassen des aktuellen Schädigungszustandes nach Anspruch 1 oder 2,
**dadurch gekennzeichnet, dass**
die Datenerfassungs- und Bearbeitungseinrichtung ein Sollcepstrum mit Hilfe einer ungeschädigten Maschine erzeugt, aus welchem dann der zu den Istcepstrumwert kongruierende Sollcepstrumwert bestimmbar ist.

4. Vorrichtung zum Erfassen des aktuellen Schädigungszustandes nach einem der vorhergehenden Ansprüche,
**dadurch gekennzeichnet, dass**
der Istcepstrumwert mit dem Schädigungsgrad der überwachenden Maschine korrelierbar ist.

5. Vorrichtung zum Erfassen des aktuellen Schädigungszustandes nach einem der vorhergehenden Ansprüche
**dadurch gekennzeichnet, dass** eine Maschineneinheit vorgesehen ist, welche bei Überschreiten eines vorab definierten Schwellwertes des Soll-Ist-Vergleichs einen Notbetrieb einleitet.

6. Vorrichtung zum Erfassen des aktuellen Schädigungszustandes nach einem der vorhergehenden Ansprüche,
**dadurch gekennzeichnet, dass** die mehreren Drucksensoren dynamische Drucksensoren sind.

7. Vorrichtung zum Erfassen des aktuellen Schädigungszustandes nach einem der vorhergehenden Ansprüche,
**dadurch gekennzeichnet, dass** die Maschine ein Verdichter mit Laufschaufeln und einem Rotor ist.

8. Vorrichtung zum Erfassen des aktuellen Schädigungszustandes nach Anspruch 7,
**dadurch gekennzeichnet, dass** der Verdichter einen Verdichterumfang und einen Verdichteraustritt umfasst und die mehreren Drucksensoren über den Verdichterumfang am Verdichteraustritt angebracht sind.

9. Vorrichtung zum Erfassen des aktuellen Schädigungszustandes nach Anspruch 7 oder 8,
**dadurch gekennzeichnet, dass** der Verdichter einen Verdichterumfang umfasst und die Drucksensoren nicht unterhalb dieser Laufschaufeln am Verdichterumfang angebracht sind.

10. Vorrichtung zum Erfassen des aktuellen Schädigungszustandes nach einem der Ansprüche 7-9,
**dadurch gekennzeichnet, dass** der Rotor eine Drehfrequenz aufweist und die minimale Bandbreite der Datenerfassungs- und Bearbeitungseinrichtung sich aus der maximalen Anzahl der Laufschaufeln, multipliziert mit der doppelten Drehfrequenz des Rotors, ergibt.

11. Vorrichtung zum Erfassen des aktuellen Schädigungszustandes nach einem der Ansprüche 1-7,
**dadurch gekennzeichnet, dass** die Maschine einen Verdichteraustrittssammelraum und einen Brennerbereich aufweist, und die Drucksensoren im Verdichteraustrittssammelraum und/oder Brennerbereich angeordnet sind.

12. Vorrichtung zum Erfassen des aktuellen Schädigungszustandes nach einem der Ansprüche 1-11,
**dadurch gekennzeichnet, dass** der Istcepstrumwert, welcher aus zumindest drei benachbarten Istcepstrenintervallen ermittelbar ist, durch Aufsummation erzeugbar ist.

13. Verfahren zum Erfassen des aktuellen Schädigungszustandes einer Maschine, bei welcher ein Druck über einen Zeitbereich der zu überwachenden Maschine durch mehrere Drucksensoren erfasst wird, und mehrere Drucksignale, welche in dem Zeitbereich vorliegen, ausgegeben werden (1)
**gekennzeichnet durch** die Schritte:
- Transformation der im Zeitbereich vorliegenden, Drucksignale in den Frequenzbereich als zeitlich diskrete Frequenzspektren durch eine in einer Datenerfassungs- und Bearbeitungseinrichtung vorgesehene Fast-Fourier-Analysevorrichtung (2),
- Räumliches und zeitliches Zusammenfassen der zeitlich diskreten Frequenzspektren in zeitlich und räumlich aggregierte diskrete Frequenzspektren durch eine in der Datenerfassungs- und Bearbeitungseinrichtung vorgesehene Räumliche-Aggregationseinheit und Zeitliche-Aggregationseinheit (3,4;4,3),
- Erzeugung von einem Cepstrum mit verschiedenen Istcepstrenwerten aus den zeitlich und räumlich aggregierten diskreten Frequenzspektren durch eine Cepstrum-Analyseeinheit (5),
- Erzeugung aus den so erzeugten Cepstren zumindest mehrere, benachbarte Istcepstrenwerte umfassende, Istcepstrenintervalle in einem vorab definierten Zeitabstand durch eine Recheneinheit (6),
- Erzeugen eines Istcepstrumwerts, welcher aus zumindest drei benachbarten Istcepstrenintervallen ermittelt wird (6),
- Berechnen eines Soll-Ist-Vergleichs mit dem so erzeugten Istcepstrumwert und einem vorab bestimmten Sollcepstrumwert (7).

14. Verfahren zum Erfassen des aktuellen Schädigungszustandes einer Maschine nach Anspruch 13,
**dadurch gekennzeichnet**, d a s s
- In der Räumlichen-Aggregationseinheit die zeitlich diskreten Frequenzspektren zu räumlich virtuellen Frequenzspektren zusammenfasst werden (3),
- anschließend in der Zeitlichen-Aggregationseinheit die räumlich virtuellen Frequenzspektren zu zeitlich-räumlich virtuellen Ziel-Frequenzspektren zusammenfasst werden (4),
- anschließend in der Cepstrum-Analyseeinheit ein Cepstrum mit verschiedenen Istcepstrenwerten aus dem zeitlich-räumlich virtuellen Ziel-Frequenzspektrum (5) erzeugt wird.

15. Verfahren nach Anspruch 13 oder 14,
**dadurch gekennzeichnet, dass** das zeitliche Zusammenfassen der räumlich virtuellen Frequenzspektren oder der zeitlich diskreten Frequenzspektren mit dem Peak-Hold-Algorithmus oder durch eine Mittelwertbildung durchgeführt wird.

16. Verfahren zum Erfassen nach einem der vorhergehenden An sprüche 13-15,
**dadurch gekennzeichnet, dass**
der Istcepstrumwert aus höchstens neun benachbarten Istcepstrenintervallen erzeugt wird.

17. Verfahren zum Erfassen des aktuellen Schädigungszustandes nach einem der Anspruch 13-16,
**dadurch gekennzeichnet, dass**
der Istcepstrumwert, welcher aus zumindest drei benachbarten Istcepstrenintervalle ermittelbar ist, durch Aufsummation erzeugt wird.

18. Verfahren zum Erfassen nach einem der vorhergehenden Ansprüche 13-17,
**dadurch gekennzeichnet, dass**
der Istcepstrumwert mit dem Schädigungsgrad der zu überwachenden Maschine korreliert.

19. Verfahren zum Erfassen nach einem der vorhergehenden Ansprüche 13-18,
**dadurch gekennzeichnet, dass**
bei Überschreiten eines vorab definierten Schwellwertes des Soll-Ist-Vergleichs einen Notbetrieb durch eine vorgesehene Maschineneinheit eingeleitet wird.

## Claims

1. Device for detecting the current state of damage of a machine, comprising:
a plurality of pressure sensors for detecting the pressure over a time period of the machine to be monitored and outputting a plurality of pressure signals, wherein the pressure signals exist in the time domain, and a data detection and processing apparatus for detecting the pressure signals from the pressure sensors and processing the pressure signals (1),
**characterized in that**
- the data detection and processing apparatus comprises a fast Fourier analysis device for carrying out a transformation of the pressure signals existing in the time domain into a frequency domain as discrete-time frequency spectra (2),
- the data detection and processing apparatus furthermore comprises a spatial aggregation unit and a temporal aggregation unit, which combine the discrete-time frequency spectra,
- such that temporally and spatially aggregated discrete frequency spectra are generable (3, 4; 4, 3),
- wherein the application of the spatial aggregation unit and also the application of the temporal aggregation unit is performable in a different sequence on the discrete-time frequency spectra,
- the data detection and processing apparatus moreover comprises a cepstrum analysis unit for generating a cepstrum with different actual cepstra values from the temporally and spatially aggregated discrete frequency spectra (5),
wherein the data detection and processing apparatus moreover comprises a computer unit, which, from the cepstra generated thus, generates actual cepstra intervals in a predefined time interval, said actual cepstra intervals comprising a plurality of adjacent actual cepstra values, as a result of which an actual cepstrum value, which is establishable from at least three adjacent actual cepstra intervals, is generable (6),
- wherein the data detection and processing apparatus comprises a unit which calculates an intended/actual comparison of the actual cepstrum value generated thus and an intended cepstrum value determined in advance (7).

2. Device for detecting the current state of damage of a machine according to Claim 1,
**characterized in that**
- the spatial aggregation unit combines the discrete-time frequency spectra to form spatially virtual frequency spectra (3)
- and subsequently the temporal aggregation unit combines the spatially virtual frequency spectra to temporally-spatially virtual target frequency spectra (4),
- and subsequently the cepstrum analysis unit generates a cepstrum with different actual cepstra values from the temporally-spatially virtual target frequency spectrum (5).

3. Device for detecting the current state of damage according to Claim 1 or 2,
**characterized in that**
the data detection and processing apparatus generates an intended cepstrum with the aid of an undamaged machine, from which the intended cepstrum value agreeing with the actual cepstrum value is then determinable.

4. Device for detecting the current state of damage according to one of the preceding claims,
**characterized in that**
the actual cepstrum value is correlatable with the degree of damage of the monitoring machine.

5. Device for detecting the current state of damage according to one of the preceding claims,
**characterized in that**
a machine unit is provided, which initiates an emergency operation if a predefined threshold of the intended/actual comparison is exceeded.

6. Device for detecting the current state of damage according to one of the preceding claims,
**characterized in that**
the plurality of pressure sensors are dynamic pressure sensors.

7. Device for detecting the current state of damage according to one of the preceding claims,
**characterized in that**
the machine is a compressor with rotor blades and a rotor.

8. Device for detecting the current state of damage according to Claim 7,
**characterized in that**
the compressor comprises a compressor circumference and a compressor outlet and the plurality of pressure sensors are attached over the compressor circumference at the compressor outlet.

9. Device for detecting the current state of damage according to Claim 7 or 8,
**characterized in that**
the compressor comprises a compressor circumference and the pressure sensors are not attached below these rotor blades on the compressor circumference.

10. Device for detecting the current state of damage according to one of Claims 7-9,
**characterized in that**
the rotor has a rotary frequency and the minimum bandwidth of the data detection and processing apparatus emerges from the maximum number of rotor blades multiplied by twice the rotary frequency of the rotor.

11. Device for detecting the current state of damage according to one of Claims 1-7,
**characterized in that**
the machine has a compressor outlet collection chamber and a burner region, and the pressure sensors are arranged in the compressor outlet collection chamber and/or burner region.

12. Device for detecting the current state of damage according to one of Claims 1-11,
**characterized in that**
the actual cepstrum value, which is establishable from at least three adjacent actual cepstra intervals, is generable by summation.

13. Method for detecting the current state of damage of a machine, in which a pressure over a time period of the machine to be monitored is detected by way of a plurality of pressure sensors, and a plurality of pressure signals, which exist in the time domain, are output (1) **characterized by** the following steps:
- transforming the pressure signals existing in the time domain into the frequency domain as discrete-time frequency spectra by a fast Fourier analysis device provided in a data detection and processing apparatus (2),
spatially and temporally combining the discrete-time frequency spectra into temporally and spatially aggregated discrete frequency spectra by a spatial aggregation unit and temporal aggregation unit provided in the data detection and processing apparatus (3, 4; 4, 3),
- generating a cepstrum with different actual cepstra values from the temporally and spatially aggregated discrete frequency spectra (5) by a cepstrum analysis unit,
- generating, from the cepstra generated thus, actual cepstra intervals comprising at least a plurality of adjacent actual cepstra values in a predefined time interval by a computer unit (6),
- generating an actual cepstrum value which is established from at least three adjacent actual cepstra intervals (6),
- calculating an intended/actual comparison of the actual cepstrum value generated thus and an intended cepstrum value determined in advance (7).

14. Method for detecting the current state of damage of a machine according to Claim 13,
**characterized in that**
- the discrete-time frequency spectra are combined to spatially virtual frequency spectra in the spatial aggregation unit (3),
- subsequently, the spatially virtual frequency spectra are combined to temporally-spatially virtual target frequency spectra in the temporal aggregation unit (4),
- subsequently, a cepstrum with different actual cepstra values is generated from the temporally-spatially virtual target frequency spectrum (5) in the cepstrum analysis unit.

15. Method according to Claim 13 or 14,
**characterized in that**
temporal combining of the spatially virtual frequency spectra or the discrete-time frequency spectra is carried out using the peak-hold algorithm or by forming an average.

16. Method for detecting according to one of the preceding Claims 13-15,
**characterized in that**
the actual cepstrum value is generated from at most nine adjacent actual cepstra intervals.

17. Method for detecting the current state of damage according to one of Claims 13-16,
**characterized in that**
the actual cepstrum value, which is establishable from at least three adjacent actual cepstra intervals, is generated by summation.

18. Method for detecting according to one of the preceding Claims 13-17,
**characterized in that**
the actual cepstrum value correlates with the degree of damage of the machine to be monitored.

19. Method for detecting according to one of the preceding Claims 13-18,
**characterized in that**
emergency operation is initiated by a provided machine unit if a predefined threshold of the intended/actual comparison is exceeded.

## Revendications

1. Dispositif de détection de l'état d'endommagement instantané d'une machine, comprenant :
plusieurs capteurs de pression pour détecter la pression sur un domaine temporel de la machine à contrôler et pour émettre plusieurs signaux de pression, les signaux de pression étant dans le domaine temporel et un dispositif de détection de données et de traitement de données pour détecter les signaux de pression des capteurs de pression et traiter les signaux (1) de pression,
**caractérisé en ce que**
- le dispositif de détection de données et de traitement des données comprend un dispositif d'analyse de Fourier rapide pour effectuer une transformation des signaux de pression se trouvant dans le domaine temporel dans un domaine fréquentiel sous la forme de spectres (2) de fréquence discrets dans le temps,
- le dispositif de détection de données et de traitement de données comprend en outre une unité d'agrégation dans l'espace et une unité d'agrégation dans le temps, qui rassemblent les spectres de fréquence discrets dans le temps,
- de manière à pouvoir produire (3, 4; 4, 3) des spectres de fréquence discrets agrégés dans le temps et dans l'espace,
- dans lequel l'utilisation de l'unité d'agrégation dans l'espace, tout comme l'utilisation de l'unité d'agrégation dans le temps, peut s'effectuer dans une succession différente sur les spectres de fréquence discrets dans le temps,
- le dispositif de détection de données et de traitement des données comprend en outre une unité d'analyse de production d'un cepstre ayant des valeurs de cepstre réelles à partir des spectres (5) de fréquence discrets agrégés dans le temps et dans l'espace,
- dans lequel le dispositif de détection de données de traitement des données comprend en outre une unité d'ordinateur, qui, à partir des cepstres ainsi produits, produit, dans un laps de temps défini à l'avance, plusieurs intervalles de cepstre réels comprenant des valeurs comprenant des valeurs de cepstre réelles voisines grâce à quoi une valeur de cepstre réelle, qui peut être déterminée à partir d'au moins trois intervalles de cepstre réels voisins, peut être produite (6),
- dans lequel le dispositif de détection de données de traitement de données comprend une unité, qui calcule (7) une comparaison consigne-réelle avec la valeur de cepstre réelle ainsi produite et une valeur de cepstre de consigne déterminée à l'avance.

2. Dispositif de détection de l'état d'endommagement instantané d'une machine suivant la revendication 1, **caractérisé en ce que**
- l'unité d'agrégation dans l'espace rassemble (3) les spectres de fréquence discrets dans le temps en spectres de fréquence virtuels dans l'espace,
- et ensuite l'unité d'agrégation dans le temps rassemble (4) les spectres de fréquence virtuels dans l'espace en spectres de fréquences cibles virtuels dans le temps - dans l'espace,
- et ensuite l'unité d'analyse de cepstre produit un cepstre ayant des valeurs de cepstre réelles différentes à partir du spectre (5) de fréquence cible virtuelle dans le temps - dans l'espace.

3. Dispositif de détection de l'état d'endommagement instantané d'une machine suivant la revendication 1,
**caractérisé en ce que**
le dispositif de détection de données et de traitement de données produit un cepstre de consigne à l'aide d'une machine non endommagée à partir duquel il peut être déterminé ensuite la valeur de cepstre de consigne congruente à la valeur de cepstre réelle.

4. Dispositif de détection de l'état d'endommagement instantané d'une machine suivant l'une des revendications précédentes,
**caractérisé en ce que**
la valeur de cepstre réelle peut être corrélée au degré d'endommagement de la machine à contrôler.

5. Dispositif de détection de l'état d'endommagement instantané d'une machine suivant l'une des revendications précédentes,
**caractérisé en ce qu'**
il est prévu une unité de machine, qui, si une valeur de seuil définie à l'avance de la comparaison consigne-réelle est dépassée, fait débuter un fonctionnement d'urgence.

6. Dispositif de détection de l'état d'endommagement instantané d'une machine suivant l'une des revendications précédentes,
**caractérisé en ce que**
les plusieurs capteurs de pression sont des capteurs de pression dynamiques.

7. Dispositif de détection de l'état d'endommagement instantané d'une machine suivant l'une des revendications précédentes,
**caractérisé en ce que**
la machine est un compresseur à aubes mobiles et à rotor.

8. Dispositif de détection de l'état d'endommagement instantané d'une machine suivant la revendication 7,
**caractérisé en ce que**
le compresseur comprend un pourtour de compresseur et une sortie de compresseur et plusieurs capteurs de pression sont mis à la sortie du compresseur sur le pourtour du compresseur.

9. Dispositif de détection de l'état d'endommagement instantané d'une machine suivant la revendication 7 ou 8,
**caractérisé en ce que**
le compresseur comprend un pourtour de compresseur et les capteurs de pression ne sont pas mis à un pourtour du compresseur en dessous de ses aubes mobiles.

10. Dispositif de détection de l'état d'endommagement instantané d'une machine suivant l'une des revendications 7 à 9,
**caractérisé en ce que**
le rotor a une fréquence de rotation et la largeur de bande minimum du dispositif de détection de données et de traitement de données se déduit du nombre maximum d'aubes mobiles multiplié par le double de la fréquence de rotation du rotor.

11. Dispositif de détection de l'état d'endommagement instantané d'une machine suivant l'une des revendications 1 à 7,
**caractérisé en ce que**
la machine a un espace collecteur de sortie du compresseur et une zone de brûleur et les capteurs de pression sont disposés dans l'espace collecteur de sortie du compresseur et/ou dans la zone du brûleur.

12. Dispositif de détection de l'état d'endommagement instantané d'une machine suivant l'une des revendications 1 à 11,
**caractérisé en ce que**
la valeur de cepstre réelle, qui peut être déterminée à partir d'au moins trois intervalles de cepstre réels voisins, peut être produite par sommation.

13. Procédé de détection de l'état d'endommages instantané d'une machine, dans lequel on détecte une pression par plusieurs capteurs de pression sur un domaine temporel de la machine à contrôler et on émet un ou plusieurs signaux de pression, qui sont dans le domaine temporel, **caractérisé par** les stades :
- transformation des signaux de pression, qui sont dans le domaine temporel, dans le domaine fréquentiel sous la forme de spectres de fréquence discrets dans le temps, par un dispositif (2) d'analyse de Fourier rapide, prévus dans un dispositif de détection de données et de traitement de données,
- rassemblement dans l'espace et dans le temps des spectres de fréquence discrets dans le temps, en spectres de fréquences discrets agrégés dans le temps et dans l'espace par une unité d'agrégation dans l'espace et une unité (3, 4 ; 4, 3) d'agrégation dans le temps prévues dans le dispositif de détection de donnés et de traitement des données
- production par une unité (5) d'analyse de cepstre d'un cepstre ayant des valeurs de cepstre réelles différentes à partir des cepstres de fréquence discrets agrégés dans le temps et dans l'espace,
- production par une unité (6) d'ordinateur dans un laps de temps défini à l'avance d'au moins un intervalle de cepstre réel comprenant plusieurs valeurs de cepstre réelles voisines à partir des cepstres ainsi produits,
- production d'une valeur de cepstre réelle que l'on détermine (6) à partir d'au moins trois intervalles de cepstre réels voisins,
- calcul d'une comparaison consigne - réelle avec la valeur de cepstre réelle ainsi produite et une valeur (7) de cepstre de consigne déterminée à l'avance.

14. Procédé de détection de l'état d'endommagement instantané d'une machine suivant la revendication 13,
**caractérisé en ce que**
- on rassemble (3), dans l'unité d'agrégation dans l'espace, les spectres de fréquence discrets dans le temps en spectres de fréquence virtuels dans l'espace,
- on rassemble (4) ensuite, dans l'unité d'agrégation dans le temps, les spectres de fréquence virtuels dans l'espace en spectres de fréquence cibles virtuels dans le temps - dans l'espace,
- on produit ensuite dans l'unité d'analyse de cepstre un cepstre ayant des valeurs de cepstre réelles différentes à partir du spectre (5) de fréquence cible virtuel dans le temps - dans l'espace.

15. Procédé suivant la revendication 13 ou 14,
**caractérisé en ce que**
l'on effectue le rassemblement dans le temps des spectres de fréquence virtuels dans l'espace ou des spectres discrets dans le temps, par l'algorithme peak-hold ou en formant une moyenne.

16. Procédé suivant l'une des revendications 13 à 15,
**caractérisé en ce que**
l'on produit la valeur de cepstre réelle à partir d'au plus neuf intervalles de cepstre réels voisins.

17. Procédé suivant l'une des revendications 13 à 16,
**caractérisé en ce que**
l'on produit par sommation la valeur de cepstre réelle, qui peut être déterminée à partir d'au moins trois intervalles de cepstre réels voisins.

18. Procédé suivant l'une des revendications précédentes 13 à 17,
**caractérisé en ce que**
la valeur de cepstre réelle est en corrélation avec le degré d'endommagement de la machine à contrôler.

19. Procédé suivant l'une des revendications précédentes 13 à 17,
**caractérisé en ce que**
si une valeur de seuil, définie à l'avance, de la comparaison -consigne réelle est dépassée, on fait débuter un fonctionnement d'urgence par une unité de machine prévue à l'avance à cet effet.
